# EUROPEAN PATENT SPECIFICATION

(11) **EP 4 419 789 B1**
(45) Date of publication and mention of the grant of the patent: **06.08.2025**
(21) Application number: 21794807.4
(22) Date of filing: 18.10.2021
(51) Int. Cl.: F02M 59/10, F02M 59/44, F16J 1/20

(54) **A CONNECTING ROD AND A PISTON FOR A HIGH-PRESSURE PISTON PUMP, AND A HIGH-PRESSURE PISTON PUMP FOR PUMPING FUEL**
PLEUELSTANGE UND KOLBEN FÜR EINE HOCHDRUCKKOLBENPUMPE UND HOCHDRUCKKOLBENPUMPE ZUM PUMPEN VON KRAFTSTOFF
BIELLE ET PISTON POUR POMPE À PISTON À HAUTE PRESSION ET POMPE À PISTON À HAUTE PRESSION POUR POMPER DU CARBURANT

(43) Date of publication of application: 28.08.2024
(73) Proprietor: Wärtsilä Finland Oy, 65100 Vaasa (FI)
(72) Inventor: EKLUND, Kjell, 65100 Vaasa (FI); HALLA-AHO, Pasi, 65100 Vaasa (FI); C. JAY, David, 65100 Vaasa (FI); ISTOLAHTI, Jaakko, 65100 Vaasa (FI); VUOHIJOKI, Antti, 65100 Vaasa (FI); KARHINEN, Heikki, 65100 Vaasa (FI)
(74) Representative: Genip Oy
(86) International application number: PCT/EP2021/078780
(87) International publication number: WO 2023/066440

(56) References cited:
- EP-A1- 2 359 015
- JP-A- H07 217 638
- US-A- 2 360 642
- US-A1- 2014 013 939
- US-B1- 6 209 510

## Description

### Technical field

The present invention relates to a connecting rod for a high-pressure piston pump according to the preamble of claim 1.

The present invention relates to piston for a high-pressure piston pump according to the preamble of claim 1.

The present invention relates to a high-pressure piston pump for pumping fuel comprising a connecting rod and a piston.

### Background art

In a so called direct injection internal combustion piston engine fuel is injected into a combustion chamber where the air is compressed to considerably high pressure. Therefore, such internal combustion piston engine needs to have a fuel injection pump which is capable of producing adequate fuel flow rate as well as rise the pressure of the fuel to a level at which the injection spray disperses into the pressurized combustion chamber as desired.

As an example of a high pressure pump it is referred to a document GB2577081B. The document discloses a piston assembly suitable for a high-pressure piston pump. The piston assembly comprises a pumping element with a concentric bore extending into a chamber so to form a shoulder. A filler element is located in the cavity having a smaller diameter such that an annular channel is formed. A fastening assembly comprising a retaining ring is pushed against the shoulder by a biasing means, preventing relative movement between the filler and the pumping elements. The hole may be sloped, and the filler tapered to match. The biasing means may be a helical or cup spring. The document discloses also a fuel pump and method of manufacturing the assembly by attaching the ring to the filler element before fitting them to the pumping element. In use high pressure flows in the annular channel to prevent the plunger contracting thus preventing fuel leakage around the plunger and maintaining volumetric efficiency.

Publication WO2018178501 discloses a high-pressure pump assembly which comprises a number of piston pump units driven by a drive shaft of the pump assembly. The pump assembly is provided with a drive shaft which operates the piston pump units coupled there to. The drive shaft is a crank shaft having eccentric parts via which the drive shaft coupled to the piston member of the pump unit. A piston member of the pump unit is coupled to the eccentric part by a pin. Documents US 2 360 642 A and US 6 209 510 B disclose a piston and a connecting rod assembly.

Connecting the piston member of a high-pressure piston pump to a connecting rod by means of a small end bushing and a piston pin leads to limited bearing surface. Piston pin diameter is determined by maximum loading on both piston and connecting rod. Because the areas are not of equal in size, this will increase the size of the attachment surfaces and therefore the size and mass of components.

An object of the invention is to provide a connecting rod for a high-pressure piston pump which is considerably improved compared to the prior art solutions.

An object of the invention is to provide a piston for a high-pressure piston pump which is considerably improved compared to the prior art solutions.

An object of the invention is to provide a high-pressure piston pump which is considerably improved compared to the prior art solutions.

### Disclosure of the Invention

Objects of the invention can be met substantially as is disclosed in the independent claims and in the other claims describing more details of different embodiments of the invention.

A connecting rod for a high-pressure piston pump, comprising a crank pin end, a piston end, wherein
- the piston end of the connecting rod comprises a piston pin arrangement configured to the connecting rod, and extending at opposite sides of the connecting rod transversely to longitudinal direction of the connecting rod, and
- the piston pin arrangement comprises at least two curved bearing surfaces, a first bearing surface and a second bearing surface, having a common center of curvature, wherein the first bearing surface is facing away from the crank pin end of the connecting rod and the second bearing surface is facing towards the crank pin end of the connecting rod,
- the first bearing surface has a first radius of first curvature and the second bearing surface has a second radius of curvature, the radius of curvature being greater than the second radius of curvature.

The connecting rod for a high-pressure piston pump is particularly intended for use as a high-pressure fuel injection pump in an internal combustion piston engine. The connecting rod according to the invention provides many advantages particularly due to the feature that the first radius of curvature being greater than the second radius of curvature

According to an embodiment of the invention the first bearing surface is an end surface of the connecting rod.

According to an embodiment of the invention first bearing surface has cross section of a continuous circular surface which extend in the direction of the center or curvature over the whole length of the piston pin arrangement. This way the area which receives compression force is maximized.

According to an embodiment of the invention the second bearing surface comprises two parallel circular surfaces arranged at sides of the connecting rod.

According to an embodiment of the invention the first bearing surface has a length in the direction of the center of curvature which is longer than total length between the ends of the second bearing surfaces in the direction of the center of curvature.

According to an embodiment of the invention the bearing surfaces in the piston pin arrangement are convex surfaces.

A piston for a high-pressure piston pump comprising a cylindrical body having a piston head at its first end, and coupling means for piston pin arrangement at a second end of the piston body, the coupling means comprising
- at least one curved bearing support surface on the piston body, having a first center of curvature which has a direction transverse to the longitudinal direction of the piston,
- at least two attachment clamps attached removably to the second end of the piston body, wherein each one of the attachment clamps comprise a curved bearing surface, having a second center of curvature, located equally to the first center of curvature when the attachment clamps are assembled to the body of the piston,
- the bearing support surface has a first radius of curvature, and the bearing surfaces of the clamps have a second radius of curvature, the first radius of curvature being greater than the second radius of curvature.

According to an embodiment of the invention the attachment clamps are configured to contact a bearing shell at its circumferential ends and press it against the at least one curved bearing surface when the attachment clamps are assembled to the body of the piston.

According to an embodiment of the invention a bearing shell is arranged on the curved bearing support surface on the piston body, pressed by the attachment clamps, such that the inner surface of the bearing shell having a center of curvature, which has a direction transverse to the longitudinal direction of the piston, is positioned equally to the center of curvature of the bearing support surface on the piston body.

According to an embodiment of the invention the attachment clamp comprises two attachment bases and a beam extending between the attachment bases, wherein the bases are at an angle to the beam and provided with holes for screw attachment.

According to an embodiment of the invention the attachment clamps are attached to the piston body having the beams parallel to each other and at a distance from each other leaving a space for assembly of a connecting rod between them.

According to an embodiment of the invention bearing support surfaces of the piston body are facing the bearing surfaces in the attachment clamps.

A high-pressure piston pump for pumping fuel according to the invention comprises a connecting rod according to anyone of the claims 1 - 6 and a piston according to anyone of the claims 7 - 12.

The invention results in at least the following advantageous effects. The load carrying bearing surface area is specific and maximized towards maximum load vectors subjected to the connecting rod when in use. This will significantly reduce the space required comparing to traditional piston pin. The attached components are much smaller.

The connecting rod is manufactured from preferably one solid billet material suitable for application. The shape is divided in two or more surfaces depending on designed load carrying capacity and load vectors.

The invention enables largest possible bearing surface between piston and connecting rod and by this the pumping effectiveness can be maximized. The component's fatigue resistance is significantly increased and the component's size can be reduced. Component will have pure compressive stress at the bearing area.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in the dependent claims are mutually freely combinable unless otherwise explicitly stated. The novel features which are considered as characteristic of the invention are set forth in particular in the appended claims.

### Brief Description of Drawings

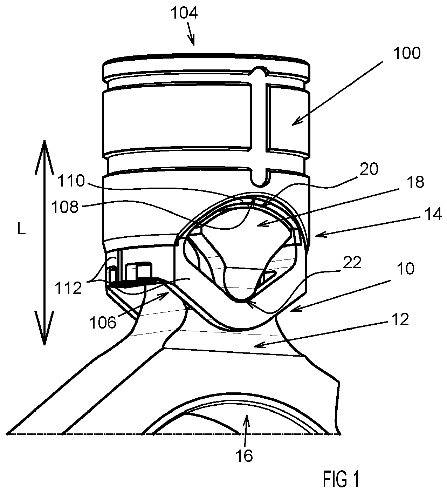

In the following, the invention will be described with reference to the accompanying exemplary, schematic drawings, in which figures 1-4 illustrate an assembly of piston and a connection rod for a high-pressure piston pump according to an embodiment of the invention in various views and positions.

### Detailed Description of Drawings

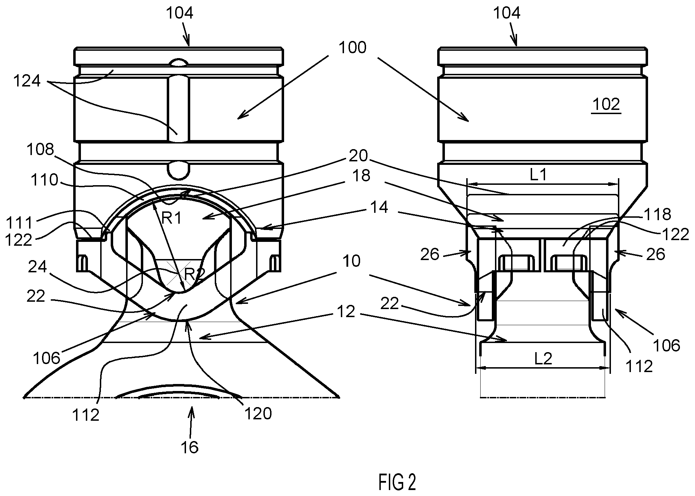

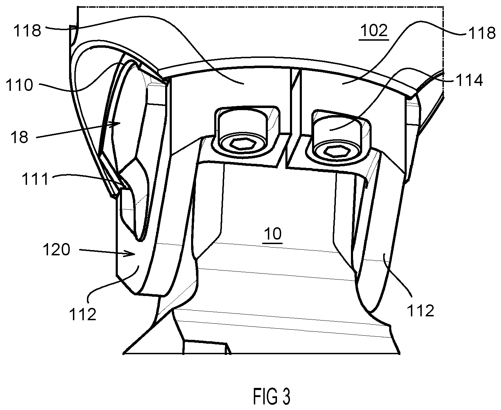

Figures 1, 2 and 3 depicts schematically a connecting rod 10 of a high-pressure fuel pump, particularly a high-pressure fuel pump, assembled together with a piston 100 of high pressure fuel pump. In other words, there is shown a connecting rod - piston assembly according to the invention. Figure 1 shows a perspective view of the piston and the connecting rod, and figures 2 and 3 show side views of the same.

High pressure fuel pump is configured to pump fuel to pressure level suitable for injection into a combustion chamber of an internal combustion piston engine. The piston 100 for the high-pressure pump is made to reciprocate in a pump cylinder by means of the connecting rod 10 which is coupled to a crank shaft at its big end bearing 16. Thus, the high pressure fuel pump comprises the connecting rod - piston assembly according to the invention, an embodiment of which is described in the following. The connecting rod comprises a crank pin end 12 and a piston end 14. There is also a substantially short connector part between the crank pin end 12 and the piston end 14 of the connecting rod. The piston 100 is coupled with the connecting rod 10 such that the piston end 14 of the connecting rod 10 comprises a piston pin arrangement 18 which is configured immovably to the connecting rod, preferably being formed directly of the material of the connecting rod 10, i.e. according to a preferred embodiment of the invention the piston pin arrangement 18 is a monolithic structure of the connecting rod 10. The piston pin arrangement 18 comprises at least two surface areas for bearing wherein the upper (farthest from the crank pin end) surface area has a larger radius compared to lower (nearest from the crank pin end) surface area.

The connecting rod 10 has a longitudinal direction L which is a radial direction of a circular opening for the big end bearing 16. In the connecting rod, the piston pin arrangement 18 extends, as protrusions 26, at opposite sides of the connecting rod 10 transversely to the longitudinal direction of the connecting rod at the end of the connecting rod 10, in axial direction of the opening for the big end bearing 16. In other words, the piston pin arrangement 18 is at the end of the connecting rod 10 and it extends on the sides of the connecting rod 10 as protrusions. The piston pin arrangement 18 comprises a first bearing surface 20 and a second bearing surface 22, which both are curved, having a common center of curvature 24. The bearing surfaces in the piston pin arrangement 18 are convex surfaces. The protruded area of the the piston pin arrangement 18 is generally of V or wedge shape so as to facilitate swinging movement of the piston 100 in respect to the connecting rod 10 when assembled together.

The fist bearing surface has a first radius of curvature R1 and the second bearing surface has a second radius of curvature R2. The radiuses are dimensioned based on intended mechanical load and allowed tensions. In the figures the first radius R1 is about 4 times the second radius R2. As it becomes clear from the figures 1 to 3, the first bearing surface 20 is facing away from the crank pin end 12 of the connecting rod 10 being an end surface of the connecting rod 10. The second bearing surface 22 is facing towards the crank pin end 12 of the connecting rod 10. The first bearing surface 20 has a cross section of a continuous circular, or a cylindrical surface which extends in the direction of the center or curvature 24 over the whole length of the piston pin arrangement. When assembled together with a piston 100 the first bearing surface faces the piston. The protrusions 26 forming piston pin arrangement 18, are mirror images of each other on opposite sides of the connecting rod 10. Thus, the second bearing surface 22 comprises two separate parallel circular surfaces arranged at both sides of the connecting rod 10.

As is depicted in the figure 2, the first bearing surface has a length L1 in the direction of the center of curvature 24 which is longer than total length L2 between the ends of the second bearing surfaces 22 in the direction of the center of curvature. This way a contact area between the piston pin arrangement and the piston 100 is considerably bigger in the first bearing surface.

Further referring to the figures 1 - 3, the piston 100 in turn comprises a cylindrical body 102 having a piston head 104 at its first end and coupling means 106 for coupling the piston pin arrangement 18 to the piston 100, arranged at a second end of the piston body 102. Firstly, the piston 100 is provided with at least a one curved bearing support surface 108 on the piston body 102 at its second end, which belong to the coupling means 106. The bearing support surface 108 extends transversely from side to side, through the piston 100. The bearing support surface 108 has a first center of curvature, which center of curvature has a direction transverse to the longitudinal direction of the piston. The curved bearing support surface may also be described as partially cylindrical surface, or barrel surface having a small curvature also in axial direction. Axial direction of the of the surface is transverse to the longitudinal direction of the piston. The bearing support surface 108 is configured to receive a bearing shell 110 when assembled for use. The bearing shell has suitable lubrication holes to enable lubrication oil to flow from one side of the shell to another side for facilitating lubrication of the first bearing surface 20. Inner surface of the bearing shell is therefore arranged to be in contact with the first bearing surface 20 of the connecting rod 10, between the curved bearing support surface 108 on the piston body 102 and first bearing surface 20 of the connecting rod 10.

The coupling means 106 further comprise at least two attachment clamps 112. The clamps are more clearly seen from below in the figure 3. The clamps 112 are attached removably to the second end of the piston body 102 by means of a number of screws 114 forming a screw joint. The clamp 112 is used for keeping the piston in contact with connecting rod during pumping cycle and especially when the inertia of piston is not compensated by the fuel pressure acting on the top 104 of the piston.

Each one of the attachment clamps 112 comprise a curved bearing surface 108, having a second center of curvature, which is positioned equally to the first center of curvature, when the attachment clamps are assembled to the body 102 of the piston, as is the case in the figures. In the coupling means 106 of the piston 100, the first bearing support surface 108 in the piston 100 has a first radius of curvature and the second bearing surface in the clamps has a second radius of curvature, the first radius of curvature being considerably greater than the second radius of curvature. The bearing support surfaces of the piston body are facing the bearing surfaces in the attachment clamps 112.

The attachment clamps 112 are configured to be in contact with the bearing shell 110 at its circumferential ends 111 and press it against the curved bearing support surface 108 when the attachment clamps 112 are assembled to the body 102 of the piston 100. The bearing shell is assembled to the piston by radial pressure. The radial pressure is made by pressing down crush height of the bearing shell. The bearing shell 110 is arranged on the curved bearing support surface 108 on the piston body, pressed by the attachment clamps 112, such that the inner surface of the bearing shell having a center of curvature, which also has a direction transverse to the longitudinal direction of the piston, is positioned equally to the center of curvature of the bearing support surface on the piston body. The piston body 102 has grooves 124 on its outer surface facilitating lubrication of the piston. The piston includes a lubrication oil channel (not shown) from its cylindrical surface to the bearing support surface 108 that ensures a continuous oil flow to the bearing shell 110.

When the piston is correctly coupled with the connecting rod the all the centers of curvatures of the bearing surfaces of the piston pin arrangement and the bearing support surface on the piston body and the curved bearing surface on the attachment clamps comprise aligned with each other.

The attachment clamp 112 comprise two attachment bases 118 and a beam 120 extending between the attachment bases 118. The bases 118 are at an angle to the beam such that the bases 118 extend from a plane of the beam 120 to the same side of the beam 120. The bases 118 are provided with holes for screw attachment to the piston body 102. The bases 118 are provided with a coupling plane 122 which is arranged against a respective coupling plane in the piston body 102. The coupling plane is advantageously parallel to the top of the piston. The beam 120 is generally V- shaped such that it extends from the coupling plane in the direction of normal of the plane. The attachment clamps 112 are attached to the piston body 102 having the beams 120 parallel to each other and at a distance from each other leaving a space for assembling the connecting rod 10 between them. The clamps 112 are assembled to the piston such that the bases 118 are facing each other and the beams 120 are at the sides such that the connecting rod 10 runs between the beams 120. The bearing contact between the attachment clamp 112 and the piston pin arrangement 18 is advantageously splash lubricated.

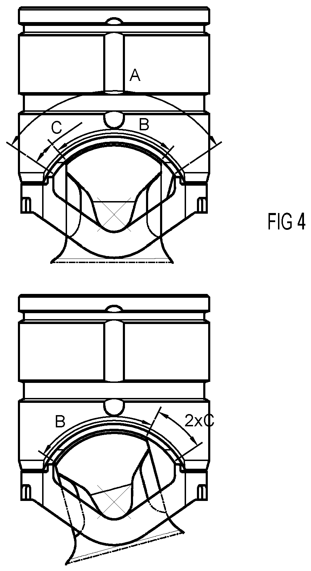

Figure 4 depicts the relative swinging movement of piston 100 and connection rod 10 as the piston is made to reciprocate in a pump barrel by means of the eccentric coupling to a drive shaft, a crank shaft. In the upper view the piston is at a center position and in the lower view the piston is at it one extreme position. There are shown the angles A, B, and C, in which the angle A is an angle of contact area in the piston, angle B is an angle of contact area in the connecting rod, and angle C is an angle of oscillation (including any safety margins). The maximum angle of contact area in the piston is determined by the size of the piston pin arrangement 18 and the first radius of curvature R1 such that the piston pin arrangement can be brought into contact (with bearing shell assembled) with the bearing support surface 108 between the circumferential ends of the curved surface of the bearing support surface 108. The angle of contact in the connecting rod B and the oscillation angle C are selected as rule by conditions of a particular application in practise.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A connecting rod (10) for a high-pressure piston pump, comprising a crank pin end (12), and a piston end (14), wherein
- the piston end (14) of the connecting rod (10) comprises a piston pin arrangement (18) configured to the connecting rod (10), and extending at opposite sides of the connecting rod (10) transversely to longitudinal direction of the connecting rod (10), and
- the piston pin arrangement (18) comprises at least two curved bearing surfaces (20,22), a first bearing surface (20) and a second bearing surface (22), having a common center of curvature (24), wherein the first bearing surface (20) is facing away from the crank pin end (12) of the connecting rod (10) and the second bearing surface (22) is facing towards the crank pin end (12) of the connecting rod (10),
- the first bearing surface (20) has a first radius of curvature (R1) and the second bearing surface (22) has a second radius of curvature (R2), the first radius of curvature (R1) being greater than the second radius of curvature (R2),
**characterized in that** the first bearing surface (20) has a cross section of a continuous circular surface which extend in the direction of the center of curvature (24) over the whole length of the piston pin arrangement (18).

2. A connecting rod (10) according to 1, **characterized in that** the first bearing surface (20) is an end surface of the connecting rod (10).

3. A connecting rod (10) according to anyone of the preceding claims, **characterized in that** the second bearing surface (22) comprises two parallel circular surfaces arranged at sides of the connecting rod (10).

4. A connecting rod (10) according to claim 3, **characterized in that** the first bearing surface (20) has a length (L1) in the direction of the center of curvature (24) which is longer than total length (L2) between the ends of the second bearing surface (22)s in the direction of the center of curvature (24).

5. A connecting rod (10) according to anyone of the preceding claims, **characterized in that** the bearing surfaces in the piston pin arrangement (18) are convex surfaces.

6. A piston (100) for a high-pressure piston pump comprising a cylindrical body (102) having a piston head (104) at its first end, and coupling means (106) for piston pin arrangement (18) the coupling means (106) comprising
at least one curved bearing support surface (108) on the piston body (102), having a first center of curvature (24) which has a direction transverse to the longitudinal direction of the piston,
**characterized in that**
the coupling means (106) is arranged at a second end of the piston body (102), and the coupling means (106) further comprising
at least two attachment clamps (112) attached removably to the second end of the piston body (102), wherein
each one of the attachment clamps (112) comprise a curved bearing surface, having a second center of curvature (24), located equally to the first center of curvature (24) when the attachment clamps (112) are assembled to the body (102) of the piston (100),
the bearing support surface has a first radius of curvature (R1) and the bearing surfaces of the clamps (112) have a second radius of curvature (R2), the first radius of curvature (R1) being greater than the second radius of curvature (R2), and wherein the piston body (102) has grooves (124) on its outer surface facilitating lubrication of the piston and the piston includes a lubrication oil channel from its cylindrical surface to the bearing support surface (108).

7. A piston (100) for a high-pressure piston pump according to claim 6, **characterized in that** the attachment clamps (112) are configured to contact a bearing shell (110) at its circumferential ends and press it against the at least one curved bearing surface when the attachment clamps (112) are assembled to the body of the piston (100).

8. A piston (100) for a high-pressure piston pump according to claim 6, **characterized in that** a bearing shell (110) is arranged on the curved bearing support surface on the piston (100) body, pressed by the attachment clamps (112), such that the inner surface of the bearing shell (110) having a center of curvature (24), which has a direction transverse to the longitudinal direction of the piston (100), is positioned equally to the center of curvature (24) of the bearing support surface on the piston body.

9. A piston (100) for a high-pressure piston pump according to anyone of the preceding claims 6 - 8, **characterized in that** the attachment clamp (112) comprise two attachment bases (118) and a beam (120) extending between the attachment bases (118), wherein the bases (118) are at an angle to the beam (120) and provided with holes for screw attachment.

10. A piston (100) for a high-pressure piston pump according to anyone of the preceding claims 6 - 9, **characterized in that** the attachment clamps (112) are attached to the piston body (102) having the beams (120) parallel to each other and at a distance from each other leaving a space for assembly of a connecting rod (10) between them.

11. A piston (100) for a high-pressure piston pump according to anyone of the preceding claims 6 - 10, **characterized in that** the bearing support surfaces of the piston body are facing the bearing surfaces in the attachment clamps (112).

12. A high-pressure piston pump for pumping fuel, comprising a connecting rod (10), which comprises
a crank pin end (12), and a piston end (14), wherein
the piston end (14) of the connecting rod (10) comprises a piston pin arrangement (18) configured to the connecting rod (10), and extending at opposite sides of the connecting rod (10) transversely to longitudinal direction of the connecting rod (10), and
the piston pin arrangement (18) comprises at least two curved bearing surfaces (20,22), a first bearing surface (20) and a second bearing surface (22), having a common center of curvature (24), wherein the first bearing surface (20) is facing away from the crank pin end (12) of the connecting rod (10) and the second bearing surface (22) is facing towards the crank pin end (12) of the connecting rod (10), and
the first bearing surface (20) has a first radius of curvature (R1) and the second bearing surface (22) has a second radius of curvature (R2), the first radius of curvature (R1) being greater than the second radius of curvature (R2),
and a piston (100) connected to the connecting rod, which piston comprises
a cylindrical body (102) having a piston head (104) at its first end, and coupling means (106) for the piston pin arrangement (18) at a second end of the piston body (102), the coupling means (106) comprising
at least one curved bearing support surface (108) on the piston body (102), having a first center of curvature (24) which has a direction transverse to the longitudinal direction of the piston,
at least two attachment clamps (112) attached removably to the second end of the piston body (102), wherein each one of the attachment clamps (112) comprise a curved bearing surface, having a second center of curvature (24), located equally to the first center of curvature (24) when the attachment clamps (112) are assembled to the body (102) of the piston (100), and
the bearing support surface has a first radius of curvature (R1) and the bearing surfaces of the clamps (112) have a second radius of curvature (R2), the first radius of curvature (R1) being greater than the second radius of curvature (R2), and further
the piston body (102) has grooves (124) on its outer surface facilitating lubrication of the piston and the piston (102) includes a lubrication oil channel from its cylindrical surface to the bearing support surface (108).

13. A high-pressure piston pump for pumping fuel according to claim 12 comprising a connecting rod (10) according to anyone of the preceding claims 1 - 5 and a piston (100) according to anyone of the preceding claims 7 - 11.

## Patentansprüche

1. Verbindungsstab (10) für eine Hochdruckkolbenpumpe, aufweisend ein Kurbelstiftende (12) und ein Kolbenende (14), wobei
- das Kolbenende (14) des Verbindungsstabs (10) eine Kolbenstiftanordnung (18) aufweist, die für den Verbindungsstab (10) eingerichtet ist und sich an entgegengesetzten Seiten des Verbindungsstabs (10) quer zur Längsrichtung des Verbindungsstabs (10) erstreckt, und
- die Kolbenstiftanordnung (18) mindestens zwei gebogene Lagerflächen (20, 22) aufweist, eine erste Lagerfläche (20) und eine zweite Lagerfläche (22), die eine gemeinsame Mitte der Biegung (24) aufweisen, wobei die erste Lagerfläche (20) von dem Kurbelstiftende (12) des Verbindungsstabs (10) abgewandt ist, und die zweite Lagerfläche (22) dem Kurbelstiftende (12) des Verbindungsstabs (10) gegenüberliegt,
- die erste Lagerfläche (20) einen ersten Biegungsradius (R1) aufweist und die zweite Lagerfläche (22) einen zweiten Biegungsradius (R2) aufweist, wobei der erste Biegungsradius (R1) größer ist als der zweite Biegungsradius (R2),
**dadurch gekennzeichnet, dass** die erste Lagerfläche (20) einen Querschnitt einer fortlaufenden kreisförmigen Fläche aufweist, der sich in die Richtung der Mitte der Biegung (24) über die gesamte Länge der Kolbenstiftanordnung (18) erstreckt.

2. Verbindungsstab (10) nach 1, **dadurch gekennzeichnet, dass** die erste Lagerfläche (20) eine Endfläche des Verbindungsstabs (10) ist.

3. Verbindungsstab (10) nach einem der vorhergehenden Ansprüche, **dadurch gekennzeichnet, dass** die zweite Lagerfläche (22) zwei parallele kreisförmige Flächen aufweist, die an Seiten des Verbindungsstabs (10) angeordnet sind.

4. Verbindungsstab (10) nach Anspruch 3, **dadurch gekennzeichnet, dass** die erste Lagerfläche (20) eine Länge (L1) in der Richtung der Mitte der Biegung (24) aufweist, länger als die gesamte Länge (L2) zwischen den Enden der zweiten Lagerfläche (22)s in der Richtung der Mitte der Biegung (24) ist.

5. Verbindungsstab (10) nach einem der vorhergehenden Ansprüche, **dadurch gekennzeichnet, dass** die Lagerflächen in der Kolbenstiftanordnung (18) konvexe Flächen sind.

6. Kolben (100) für eine Hochdruckkolbenpumpe, aufweisend einen zylindrischen Körper (102), der einen Kolbenkopf (104) an seinem ersten Ende aufweist, und ein Koppelungsmittel (106) für die Kolbenstiftanordnung (18), das Koppelungsmittel (106) aufweisend
mindestens eine gebogene Lagerauflagefläche (108) an dem Kolbenkörper (102), aufweisend eine erste Mitte der Biegung (24), die eine Richtung quer zu der Längsrichtung des Kolbens aufweist,
**dadurch gekennzeichnet, dass**
das Koppelungsmittel (106) an einem zweiten Ende des Kolbenkörpers (102) angeordnet ist und das Koppelungsmittel (106) ferner aufweist
mindestens zwei Befestigungsklemmen (112), die entfernbar an dem zweiten Ende des Kolbenkörpers (102) befestigt sind, wobei
jede der Befestigungsklemmen (112) eine gebogene Lagerfläche aufweist, die eine zweite Mitte der Biegung (24) aufweist, die gleich weit von der ersten Mitte der Biegung (24) entfernt platziert ist, wenn die Befestigungsklemmen (112) an dem Körper (102) des Kolbens (100) montiert sind,
die Lagerfläche einen ersten Biegungsradius (R1) aufweist und die Lagerflächen der Klemmen (112) einen zweiten Biegungsradius (R2) aufweisen, wobei der erste Biegungsradius (R1) größer ist als der zweite Biegungsradius (R2) und wobei der Kolbenkörper (102) Nuten (124) an seiner Außenfläche aufweist, die die Schmierung des Kolbens ermöglichen und der Kolben einen Schmierölkanal von seiner zylindrischen Fläche zur Lagerauflagefläche (108) umfasst.

7. Kolben (100) für eine Hochdruckkolbenpumpe nach Anspruch 6, **dadurch gekennzeichnet, dass** die Befestigungsklemmen (112) eingerichtet sind, um mit einer Lagerschale (110) an deren Umfangsenden in Kontakt zu stehen und sie gegen mindestens eine gebogene Lagerfläche zu drücken, wenn die Befestigungsklemmen (112) an dem Körper des Kolbens (100) montiert sind.

8. Kolben (100) für eine Hochdruckkolbenpumpe nach Anspruch 6, **dadurch gekennzeichnet, dass** eine Lagerschale (110) an der gebogenen Lagerauflagefläche an dem Körper des Kolbens (100) angeordnet ist und durch die Befestigungsklemmen (112) gedrückt wird, sodass die Innenfläche der Lagerschale (110), die eine Mitte der Biegung (24) aufweist, die eine Richtung quer zu der Längsrichtung des Kolbens (100) aufweist, gleich zu der Mitte der Biegung (24) der Lagerauflagefläche des Kolbenkörpers positioniert ist.

9. Kolben (100) für eine Hochdruckkolbenpumpe nach einem der vorhergehenden Ansprüche 6 bis 8, **dadurch gekennzeichnet, dass** die Befestigungsklemme (112) zwei Befestigungsbasen (118) und einen Träger (120), der sich zwischen den Befestigungsbasen (118) erstreckt, aufweist, wobei die Basen (118) in einem Winkel zu dem Träger (120) stehen und mit Löchern für die Schraubbefestigung versehen sind.

10. Kolben (100) für eine Hochdruckkolbenpumpe nach einem der vorhergehenden Ansprüche 6 bis 9, **dadurch gekennzeichnet, dass** die Befestigungsklemmen (112) an dem Kolbenkörper (102) befestigt sind, der die Träger (120) aufweist, die parallel zueinander sind und eine Entfernung voneinander aufweisen, sodass Raum für die Montage eines Verbindungsstabs (10) dazwischen bleibt.

11. Kolben (100) für eine Hochdruckkolbenpumpe nach einem der vorhergehenden Ansprüche 6 bis 10, **dadurch gekennzeichnet, dass** die Lagerauflageflächen des Kolbenkörpers den Lagerflächen in den Befestigungsklemmen (112) gegenüberliegen.

12. Hochdruckkolbenpumpe zum Pumpen von Kraftstoff, aufweisend einen Verbindungsstab (10), der aufweist
ein Kurbelstiftende (12) und ein Kolbenende (14), wobei
das Kolbenende (14) des Verbindungsstabs (10) eine Kolbenstiftanordnung (18) aufweist, die für den Verbindungsstab (10) eingerichtet ist und sich an entgegengesetzten Seiten des Verbindungsstabs (10) quer zur Längsrichtung des Verbindungsstabs (10) erstreckt, und
die Kolbenstiftanordnung (18) mindestens zwei gebogene Lagerflächen (20, 22) aufweist, eine erste Lagerfläche (20) und eine zweite Lagerfläche (22), die eine gemeinsame Mitte der Biegung (24) aufweisen, wobei die erste Lagerfläche (20) von dem Kurbelstiftende (12) des Verbindungsstabs (10) abgewandt ist, und die zweite Lagerfläche (22) dem Kurbelstiftende (12) des Verbindungsstabs (10) gegenüberliegt, und
die erste Lagerfläche (20) einen ersten Biegungsradius (R1) aufweist und die zweite Lagerfläche (22) einen zweiten Biegungsradius (R2) aufweist, wobei der erste Biegungsradius (R1) größer ist als der zweite Biegungsradius (R2),
und ein Kolben (100), der mit dem Verbindungsstab verbunden ist, der Kolben aufweisend
einen zylindrischen Körper (102), der einen Kolbenkopf (104) an seinem ersten Ende und Koppelungsmittel (106) für die Kolbenstiftanordnung (18) an einem zweiten Ende des Kolbenkörpers (102) aufweist, das Koppelungsmittel (106) aufweisend
mindestens eine gebogene Lagerauflagefläche (108) an dem Kolbenkörper (102), aufweisend eine erste Mitte der Biegung (24), die eine Richtung quer zu der Längsrichtung des Kolbens aufweist,
mindestens zwei Befestigungsklemmen (112), die entfernbar an dem zweiten Ende des Kolbenkörpers (102) befestigt sind, wobei jede der Befestigungsklemmen (112) eine gebogene Lagerfläche aufweist, die eine zweite Mitte der Biegung (24) aufweist, die gleich weit von der ersten Mitte der Biegung (24) entfernt platziert ist, wenn die Befestigungsklemmen (112) an dem Gehäuse (102) des Kolbens (100) montiert sind, und
die Lagerauflagefläche einen ersten Biegungsradius (R1) aufweist und die zweite Lagerauflagefläche (112) einen zweiten Biegungsradius (R2) aufweist, wobei der erste Biegungsradius (R1) größer ist als der zweite Biegungsradius (R2), und ferner
der Kolbenkörper (102) Nuten (124) an seiner Außenfläche aufweist, die die Schmierung des Kolbens ermöglichen und der Kolben (102) einen Schmierölkanal von seiner zylindrischen Fläche zu der Lagerauflagefläche (108) umfasst.

13. Hochdruckkolbenpumpe zum Pumpen von Kraftstoff nach Anspruch 12, aufweisend einen Verbindungsstab (10) nach einem der vorhergehenden Ansprüche 1 bis 5 und einen Kolben (100) nach einem der vorhergehenden Ansprüche 7 bis 11.

## Revendications

1. Bielle (10) pour pompe à piston à haute pression, comprenant une extrémité de maneton (12) et une extrémité de piston (14), dans laquelle
- l'extrémité de piston (14) de la bielle (10) comprend un agencement d'axe de piston (18) configuré sur la bielle (10) et s'étendant de part et d'autre de la bielle (10) transversalement à la direction longitudinale de la bielle (10) et
- l'agencement d'axe de piston (18) comprend au moins deux surfaces d'appui incurvées (20, 22), une première surface d'appui (20) et une deuxième surface d'appui (22), ayant un centre de courbure commun (24), dans lequel la première surface d'appui (20) est opposée à l'extrémité de maneton (12) de la bielle (10) et la deuxième surface d'appui (22) est tournée vers l'extrémité de maneton (12) de la bielle (10),
- la première surface d'appui (20) présente un premier rayon de courbure (R1) et la deuxième surface d'appui (22) présente un deuxième rayon de courbure (R2), le premier rayon de courbure (R1) étant supérieur au deuxième rayon de courbure (R2),
**caractérisée en ce que** la première surface d'appui (20) présente une section transversale d'une surface circulaire continue qui s'étend en direction du centre de courbure (24) sur toute la longueur de l'agencement d'axe de piston (18).

2. Bielle (10) selon la revendication 1, **caractérisée en ce que** la première surface d'appui (20) est une surface d'extrémité de la bielle (10).

3. Bielle (10) selon une quelconque des revendications précédentes, **caractérisée en ce que** la deuxième surface d'appui (22) comprend deux surfaces circulaires parallèles disposées des deux côtés de la bielle (10).

4. Bielle (10) selon la revendication 3, **caractérisée en ce que** la première surface d'appui (20) présente une longueur (L1) en direction du centre de courbure (24) supérieure à la longueur totale (L2) entre les extrémités de la deuxième surface d'appui (22) en direction du centre de courbure (24).

5. Bielle (10) selon une quelconque des revendications précédentes, **caractérisée en ce que** les surfaces d'appui de l'agencement d'axe de piston (18) sont des surfaces convexes.

6. Piston (100) pour pompe à piston à haute pression, comprenant un corps cylindrique (102) doté d'une tête de piston (104) à sa première extrémité, et un moyen d'accouplement (106) pour l'agencement d'axe de piston (18), le moyen d'accouplement (106) comprenant
au moins une surface d'appui incurvée (108) sur le corps de piston (102), dont un premier centre de courbure (24) est transversal à la direction longitudinale du piston.
**caractérisé en ce que**
le moyen d'accouplement (106) est disposé à une deuxième extrémité du corps de piston (102) et le moyen d'accouplement (106) comprenant en outre
au moins deux brides de fixation (112) fixées de manière amovible à la deuxième extrémité du corps de piston (102), dans lequel
chacune des brides de fixation (112) comprend une surface d'appui incurvée, dont le deuxième centre de courbure (24) est situé à égale distance du premier centre de courbure (24) lorsque les brides de fixation (112) sont assemblées au corps (102) du piston (100),
la surface d'appui du palier présente un premier rayon de courbure (R1) et les surfaces d'appui des brides (112) présentent un deuxième rayon de courbure (R2), le premier rayon de courbure (R1) étant supérieur au deuxième rayon de courbure (R2) et dans lequel le corps de piston (102) présente des rainures (124) sur sa surface extérieure facilitant la lubrification du piston et le piston comprend un canal d'huile de lubrification reliant sa surface cylindrique à la surface d'appui du palier (108).

7. Piston (100) pour pompe à piston à haute pression selon la revendication 6, **caractérisé en ce que** les brides de fixation (112) sont configurées pour entrer en contact avec un coussinet (110) à ses extrémités circonférentielles et la presser contre au moins une surface d'appui incurvée lorsque les brides de fixation (112) sont assemblées au corps du piston (100).

8. Piston (100) pour pompe à piston à haute pression selon la revendication 6, **caractérisé en ce qu'**une coquille de palier (110) est disposée sur la surface d'appui incurvée du corps du piston (100), pressée par les brides de fixation (112), de sorte que la surface intérieure du coussinet (110), dont un centre de courbure (24) est transversal à la direction longitudinale du piston (100), soit positionnée au même niveau que le centre de courbure (24) de la surface d'appui sur le corps du piston.

9. Piston (100) pour pompe à piston à haute pression selon une quelconque des revendications 6 à 8 précédentes, **caractérisé en ce que** la bride de fixation (112) comprend deux bases de fixation (118) et une poutre (120) s'étendant entre les bases de fixation (118), dans lequel les bases (118) forment un angle avec la poutre (120) et sont pourvues de trous pour la fixation par vis.

10. Piston (100) pour pompe à piston à haute pression selon une quelconque des revendications 6 à 9 précédentes, **caractérisé en ce que** les brides de fixation (112) sont fixées au corps de piston (102) avec les poutres (120) parallèles entre elles et à distance l'une de l'autre en laissant un espace pour le montage d'une bielle (10).

11. Piston (100) pour pompe à piston à haute pression selon une quelconque des revendications 6 à 10 précédentes, **caractérisé en ce que** les surfaces d'appui du corps du piston sont en regard des surfaces d'appui des brides de fixation (112).

12. Pompe à piston à haute pression pour le pompage de carburant, comprenant une bielle (10),
qui comprend une extrémité de maneton (12) et une extrémité de piston (14),
l'extrémité de piston (14) de la bielle (10) comprend un agencement d'axe de piston (18) configuré sur la bielle (10) et s'étendant de part et d'autre de la bielle (10) transversalement à la direction longitudinale de la bielle (10) et
l'agencement d'axe de piston (18) comprend au moins deux surfaces d'appui incurvées (20, 22), une première surface d'appui (20) et une deuxième surface d'appui (22), ayant un centre de courbure commun (24), dans lequel la première surface d'appui (20) est opposée à l'extrémité de maneton (12) de la bielle (10) et la deuxième surface d'appui (22) est tournée vers l'extrémité de maneton (12) de la bielle (10) et
la première surface d'appui (20) présente un premier rayon de courbure (R1) et la deuxième surface d'appui (22) présente un deuxième rayon de courbure (R2), le premier rayon de courbure (R1) étant supérieur au deuxième rayon de courbure (R2),
et un piston (100) relié à la bielle, lequel piston comprend
un corps cylindrique (102) doté d'une tête de piston (104) à sa première extrémité, et un moyen d'accouplement (106) pour l'agencement d'axe de piston (18) à une deuxième extrémité du corps de piston (102), le moyen d'accouplement (106) comprenant
au moins une surface d'appui incurvée (108) sur le corps de piston (102), dont un premier centre de courbure (24) est transversal à la direction longitudinale du piston,
au moins deux brides de fixation (112) fixées de manière amovible à la deuxième extrémité du corps de piston (102), dans lequel chacune des brides de fixation (112) comprend une surface d'appui incurvée dont le deuxième centre de courbure (24) est situé à égale distance du premier centre de courbure (24) lorsque les brides de fixation (112) sont assemblées au corps (102) du piston (100) et
la surface d'appui présente un premier rayon de courbure (R1) et les surfaces d'appui des brides (112) présentent un deuxième rayon de courbure (R2), le premier rayon de courbure (R1) étant supérieur au deuxième rayon de courbure (R2) et en outre
le corps de piston (102) présente des rainures (124) sur sa surface extérieure facilitant la lubrification du piston et le piston (102) comprend un canal d'huile de lubrification reliant sa surface cylindrique à la surface d'appui (108).

13. Pompe à piston à haute pression pour le pompage de carburant selon la revendication 12, comprenant une bielle (10) selon une quelconque des revendications 1 à 5 et un piston (100) selon une quelconque des revendications 7 à 11.
